# EUROPEAN PATENT APPLICATION

(11) **EP 2 287 601 A1**
(43) Date of publication of application: **23.02.2011**
(21) Application number: 09741661.4
(22) Date of filing: 07.05.2009
(51) Int. Cl.: G01N 27/64, H01J 49/00, G06F 15/00

(54) **DETECTING METHOD USING ION MOBILITY SPECTOMETRY AND ION MOBILITY SPECTROMETER THEREOF**

(30) Priority: 09.05.2008 CN 200810106169
(71) Applicant: Nuctech Company Limited, Tongfang Building Shuangqinglu Haidian District Beijing 100084 (CN)
(72) Inventor: RUAN, Ming, Beijing 100084 (CN); JIAO, Peng, Beijing 100084 (CN); JIAN, Yingrong, Beijing 100084 (CN); ZHANG, Yangtian, Beijing 100084 (CN); LIN, Jin, Beijing 100084 (CN); PENG, Hua, Beijing 100084 (CN)
(74) Representative: Kraenzmer, Martin
(86) International application number: PCT/CN2009/000497
(87) International publication number: WO 2009/135386

(57) **Abstract**

This invention discloses a detection method for an ion migration spectrum which comprises: acquiring an ion migration spectrum of pure carrier gas and an ion migration spectrum of carrier gas containing a test substance sample; and performing differential process on the ion migration spectrum of said pure carrier gas and the ion migration spectrum of the carrier gas containing the test substance sample to acquire a differential spectrum, wherein the value of a characteristic peak of said differential spectrum represents properties of said sample of substances, said method avoids interferences on the migration spectrum from interference sources of the apparatus itself, thereby improving detection sensitivity and accuracy of the ion migration spectrum; and migration spectrum shift caused by variations in the environmental conditions can be found and corrected through the differential process on the migration spectrum of the pure carrier gas, thereby achieving self-stableness and self-correction of the ion migration spectrometer. This invention further discloses an ion migration spectrum detector and an ion migration spectrometer using said method.

## Description

### Related Application

This application claims priority to Chinese Patent Application No. 200810106169.X, filed May 9, 2008, which is incorporated herein by reference in its entirety.

### Technical Field

This invention relates to an ion migration spectrometer (IMS) and a detection method for an ion migration spectrum used therein, in particular relates to a detection method for an ion migration spectrum which performs differential peak search and an ion migration spectrometer using this method.

### Background

The detection technique for an ion migration spectrum was firstly proposed by Karasek and Cohen as a method for analyzing organic compounds in 1970. From the beginning, the IMS has already aroused people's strong interest, however, until the end of the 1980s, did people begin to grasp some difficulties in the IMS such as the process of molecular chemical ionization under the atmospheric pressure (APCI), thereby greatly improving the performance of the IMS which is then broadly applied to various aspects. At present, the products based on IMS have been widely used for detecting exploders, drugs, chemical reagents at the airport, dock, station, etc.. The IMS has become one of the existing broadly-used technologies for detecting trace chemicals due to its advantages of high sensitivity (10⁻⁸ to 10⁻¹⁴ g), short analysis time, strong function, and not too high cost, etc..

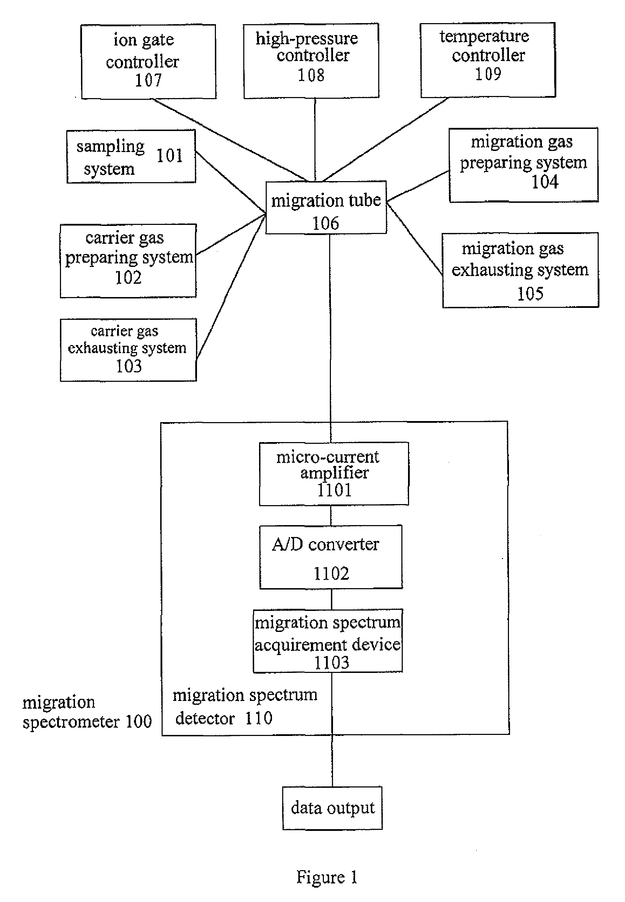

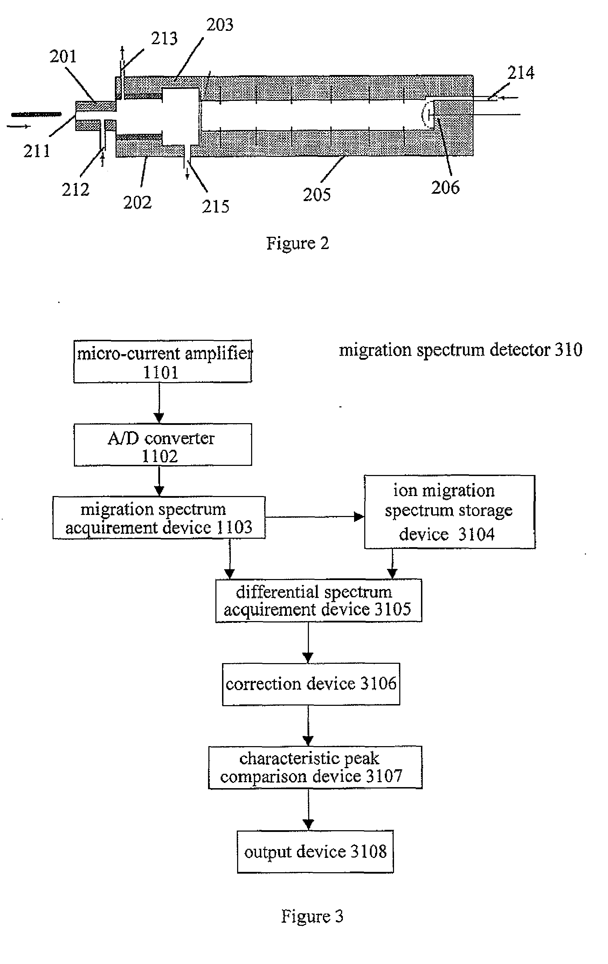

Figs. 1 and 2 illustrate a structural diagram of a conventional IMS system and its front end (namely a migration tube) respectively. As illustrated in Fig. 1, the conventional IMS system is comprised of a sampling system 101 for sampling ; a carrier gas preparation system 102 and a carrier gas exhausting system 103 for preparing carrier gas and exhausting carrier gas, respectively; a migration gas preparation system 104 and a migration gas exhausting system 105 for preparing migration gas and exhausting migration gas respectively; a migration tube 106 as the core part of the IMS system; an ion gate of the migration tube 106 and a controller 107; a high-pressure generator and controller 108 and a temperature sensor and controller 109; and a migration spectrum detector 110. The migration spectrum detector 110 comprises a micro-current amplifier 1101 for amplifying the current detected by a charge sensor 206 in the migration tube 106, an A/D converter 1102 for digitizing the amplified current value; and a migration spectrum acquirement device 1103 for performing calibration on the digitized current signals to acquire an eventual migration spectrum.

As illustrated in Fig. 2, the migration tube 106 mainly comprises a gasifier 201, an ion source 202, a reaction region 203, an ion gate 204, a drift region 205, a charge sensor 206, a sample inlet 211, a carrier gas inlet 212 and outlet 213, a migration gas inlet 214 and outlet 215. The basic operation principles of the IMS are described as follows:
1. A sample (solid sample or gas sample) containing suspect substances enters into the migration tube 106 via the sampling system 101.
2. After the sample has been gasified by gasifier 201, molecules of the suspect substances enter into the ion source 202 and are ionized into molecular ions.
3. The mixed ions are introduced into the reaction region 203 via an electrical field where the molecular ions have been fully reacted with each other.
4. The ion gate 204 is initiated to cause the ions to drift in the drift region 205 with a constant electric field intensity which is filled with gas.
5. The charge sensor 206 senses time for the ions to pass through the drift region.
6.The time for different ions to pass through the drift region 205 to the charge sensor 206 is different due to the different characteristics of the ions, thus, the arrival time of the charges detected by the charge sensor 206 is related to the characteristics of the ions, so the migration spectrum detector 110 can acquire a one-dimensional time ion migration spectrum related to the characteristics of the ions by processing the detection results of the charge sensor 206.
7. Various processing are performed on the ion migration spectrum and a characteristic ion peak of of the suspect substance is identified from the ion migration spectrum via a software algorithm, so that an appropriate alarm information can be generated accordingly.

Since the ion migration spectrum is easily interfered by the peaks of various interference substance, the pressure and temperature of the atmosphere, and the ion migration spectrum is complicated by the mechanical vibration, electronics noise and so on. So, the key for improving detection sensitivity and accuracy of the suspect substances by the ion migration spectrometer and reducing the false alarm rate is to find the characteristic ion migration peak of the suspect substance accurately and efficiently and to eliminate various interferences as much as possible. Currently, there are various methods for processing and seeking a ion migration peak. However, there is no good way to eliminate various interferences and find the characteristic ion migration peak of the suspect substance accurately and efficiently.

Thus, what is desired is an improved method for performing spectrum process and peak search on the ion migration spectrum, eliminating various interferences, seeking a characteristic ion migration peak of the suspect substance accurately and efficiently, improving detection sensitivity and accuracy of the suspect substance by the ion migration spectrometer and reducing the false alarm rate, as well as an ion migration spectrometer using the method.

### Summary of the Invention

The applicant has found that an ion source in an ion migration spectrometer provides an approximately stable charge source. When the atmosphere pressure, temperature and electrical field are constant, the total charge amount entering into the reaction region of the system is substantially unchanged after the carrier gas has been ionized, no matter the carrier gas is pure carrier gas or gas mixed with samples or interference substances. Likewise, the total charge amount of the molecular ions arriving at the charge sensor is almost constant after the molecular ions exchange charge each other and pass through the drift region. Certainly, the structure of the migration spectrum can be changed according to the ion characteristic differences.

Considering the above characteristics of the ion migration spectrometer, if a differential process is performed on the ion migration spectrum of the pure carrier gas and the gas mixed with samples (which is also referred as sample gas in the description hereafter), it will eliminate difficulties and errors brought by various interference sources to the spectrum process and peak search of the migration spectrum (because the intensity and structure of many interference sources do not have significant change during a short period of time), highlight the specific structure of the ion migration spectrum of the sample gas, facilitate subsequent spectrum process and peak search, improve the detection sensitivity and accuracy for the suspect substance by the ion migration spectrometer, and reduce the false alarm rate at the same time.

Thus, this invention provides a differential method for performing process and peak search on an ion migration spectrum which can seek a characteristic peak of ion migration spectrum of the suspect substance accurately and efficiently, improve the sensitivity and accuracy of the detection of the suspect substance by the ion migration spectrometer, and reduce the false alarm rate.

According to one aspect of this invention, there is provided a detection method for an ion migration spectrum, comprising steps of: acquiring an ion migration spectrum of pure carrier gas; acquiring an ion migration spectrum of carrier gas containing a test substance sample; and performing differential process on the ion migration spectrums of the pure carrier gas and the carrier gas containing the test substance sample to acquire a differential spectrum, wherein the value of a characteristic peak of said differential spectrum represents the properties of said test substance sample.

According to another aspect of this invention, there is provided an ion migration spectrum detector, comprising: a migration spectrum acquiremnt device for acquiring the migration spectrums of carrier gas containing a test substance sample and the pure carrier gas respectively, said ion migration spectrum detector further comprises a differential spectrum acquirement device for performing differential process on the migration spectrums of said pure carrier gas and the carrier gas containing the test substance sample to acquire a differential spectrum, wherein the value of a characteristic peak of said differential spectrum represents properties of said test substance sample.

According to another aspect of this invention, there is provided an ion migration spectrometer comprising the above mentioned ion migration spectrum detector.

Compared with the prior art, this invention can avoid difficulties and errors brought by various interference sources of the apparatus itself to the spectrum process and peak search on the migration spectrum, highlights the specific structure of the ion migration spectrum of the test substance, seeks the characteristic peak of the ion migration spectrum of the harmful substance more accurately and fast, thereby it improves the sensitivity and accuracy of detecting the suspect substance by the ion migration spectrometer, and reduces the false alarm rate at the same time.

Furthermore, this invention mainly relates to process the detected migration spectrum to seek the characteristic peak of the ion migration spectrum of the suspect substance more accurately and fast, therefore, it is not required to modify the ion migration spectrometer, thus it can be seen that this invention can be adapted to improve detection sensitivity and accuracy of the ion migration spectrometer at a relatively low cost. This invention is also applicable to all the technical fields of developing and manufacturing the ion migration spectrometer.

### Description of Figures

Other various advantages and benefits will become apparent for those skilled in the art after reading detailed description of the following preferred embodiments. The drawings are only used for illustrating the preferred embodiments, which are not intended as limitations to this invention. Moreover, the corresponding reference signs are used to represent the corresponding components throughout the drawings. In the drawings:
Figure 1 illustrates a structural diagram of a system of a conventional ion migration spectrometer;
Figure 2 illustrates a structural diagram of a migration tube in the conventional ion migration spectrometer;
Figure 3 shows a structural diagram of a migration spectrum detector according to a preferred embodiment of this invention; and
Figure 4 shows a detection method for an ion migration spectrum according to a preferred embodiment of this invention.

### Detail Description

This invention will be further described by combining the drawings and specific embodiments.

Figure 3 shows a structural diagram of a migration spectrum detector 310 according to a preferred embodiment of this invention. The migration spectrum detector 310 can be used in the conventional migration spectrometer 100 to substitute the migration spectrum detector 110 shown in Figure 1 to improve detection sensitivity and accuracy of the conventional migration spectrometer. Therefore, the migration spectrum detector 310 can be used in connection with a migration tube shown in Figure 2 completely.

As shown in Figure 3, the migration spectrum detector 310 further comprises an ion migration spectrum storage 3104 and a differential spectrum acquirement device 3105 in addition to the micro-current amplifier 1101, the A/D converter 1102 and the migration spectrum acquirement device 1103 in the conventional migration spectrum detector 110. Certainly, as long as the migration spectrum can be acquired, all the other components which can achieve the functions of the micro-current amplifier 1101, the A/D converter 1102 and the migration spectrum obtaining device 1103 are also possible and within the protection scope of this invention. The ion migration spectrum storage 3104 is used to store a migration spectrum of pure carrier gas and a migration spectrum of carrier gas containing a test substance sample acquired by the migration spectrum acquirement device 1103 respectively. The differential spectrum acquirement device 3105 performs differential process on the migration spectrum of the pure carrier gas and the migration spectrum of the carrier gas containing the test substance sample to acquire a differential spectrum, and also performs processes of smoothing and peak search on the differential spectrum to acquire a characteristic peak of the differential spectrum that characterizes the test substance sample. Optionally, the migration spectrum detector 310 further comprises: a differential spectrum correction device 3106 for correcting the acquired peak position according to the conditions of the environment where the ion migration spectrometer is located; a characteristic peak comparison device 3107 for comparing the acquired characteristic peak that characterizes the test substance sample with characteristic peaks in a characteristic peak storage of dangerous substances to determine whether the test substance sample contains the dangerous substances; and an output device 3108 for outputting a detection result for the test substance sample.

Furthermore, in the migration spectrum detector 310, the migration spectrum acquirement device 1103 can acquire the migration spectrums of the pure carrier gas for many times, while the differential spectrum acquiring device 3105 can perform the differential process on the acquired migration spectrums of the pure carrier gas to find and correct a migration spectrum shift caused by variations in the environmental conditions, thereby achieving self-stableness and self-correction of the ion migration spectrometer.

The migration spectrum detector 310 eliminates the impact on the migration spectrum from the interference sources of the detector or spectrometer itself by means of performing the differential process on the migration spectrum of the pure carrier gas and the migration spectrum of the carrier gas containing the test substance sample, thereby improving sensitivity and accuracy of the apparatus.

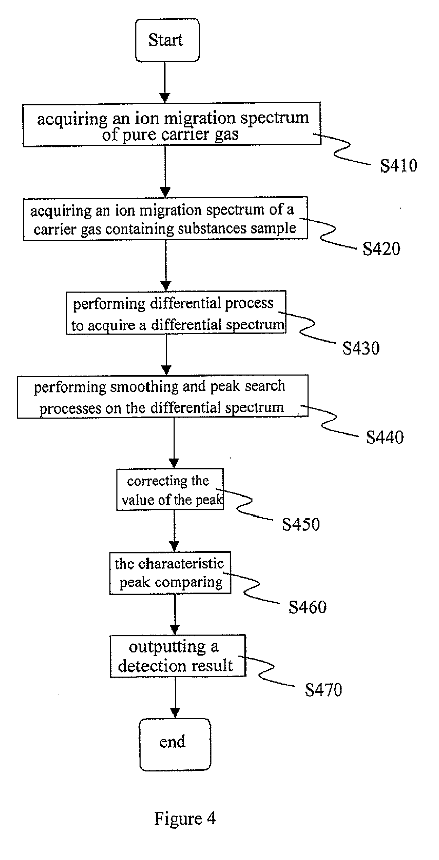

Figure 4 shows a flow chart of a detection method for a ion migration spectrum executed by the migration spectrum detector 310 in detail.

In step S410, the migration spectrum acquirement device 1103 acquires the migration spectrum (Ai, i=1, 2, 3, ...) of the pure carrier gas, and optionally, stores the acquired migration spectrum of the pure carrier gas in the ion migration spectrum storage 3104. In step S420, the migration spectrum acquirement device 1103 acquires the migration spectrum (Bi, i=1, 2, 3, ...) of the carrier gas containing a test substance sample, and optionally, stores the acquired migration spectrum of the carrier gas containing the test substance sample in the ion migration spectrum storage 3104. In step S430, the differential spectrum acquirement device 3105 performs the differential process on the ion migration spectrum of the pure carrier gas and the ion migration spectrum of the carrier gas containing the test substance sample to acquire a differential spectrum (Ci, i=1, 2, 3, ...). In step S440, the processes of smoothing and peak search are performed on the differential spectrum Ci in the differential spectrum acquirement device 3105 (Hj=F(Ci), j=1, 2, 3, ..., wherein Hj represents the smoothed differential spectrum). These processes, including the differential process, smoothing and peak search can adopt any methods in the existing technology of spectrum analysis. Then, optionally, said method further comprises step S450, wherein the acquired peak position and the differential spectrum Hj are corrected by the differential spectrum correction device 3106 according to the condition of the environment where the ion migration detector 310 or spectrometer is located; step S460, wherein the acquired characteristic peak that represents the test substance sample is compared with the characteristic peaks in the characteristic peak storage of dangerous substances to determine whether the test substance sample contains dangerous substances; and step S470, in which the detection result of the test substance sample is outputted.

In the differential process at step S430, no matter which solution is adopted, i.e., whether it is a solution of forward difference, backward difference or difference for many times, it belongs to the protection scope of this invention.

In said method, the migration spectrums of the pure carrier gas can be further acquired for many times and the differential process on the acquired ion migration spectrums of the pure carrier gas can be performed for many times to find the migration spectrum shift caused by variations in the environmental conditions and correct said shift, thereby achieving self-stableness and self-correction of the ion migration spectrometer.

It should be noted that the components in the migration spectrum detector 310 are logically divided according to the functions to be performed, however, this invention is not limited to this, the respective components in the migration spectrum detector 310 can be re-divided or combined according to the requirement, for example, some components can be combined into a single one, or some components can be further divided into more sub-components.

Embodiments of the present invention may be implemented in hardware, or as software modules running on one or more processors, or in a combination thereon. That is, those skilled in the art will appreciate that a microprocessor or digital signal processor (DSP) may be used in practice to implement some or all of the functionality of some or all components of the migration spectrum detector according to an embodiment of the present invention. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

It should be noted that the aforesaid embodiments are illustrative of this invention instead of restricting this invention, substitute embodiments may be designed by those skilled in the art without departing from the scope of the claims enclosed. In the claims, any reference symbols located between the parentheses should not constitute restrictions to the claims. The word "include" does not exclude elements or steps which are present but not listed in the claims. The word "a" or "one" preceding the elements does not exclude the presence of a plurality of such elements. This invention can be achieved by means of hardware including several different elements or by means of a suitably programmed computer. In the unit claims that list several means, several ones among these means can be specifically embodied via the same hardware item. The use of such words as first, second, third does not represent any order, which can be explained as names.

## Claims

1. A detection method of an ion migration spectrum, comprising steps of:
acquiring an ion migration spectrum of a pure carrier gas;
acquiring an ion migration spectrum of a carrier gas containing a test substance sample; and
performing differential process on the ion migration spectrum of said pure carrier gas and the ion migration spectrum of the carrier gas containing a test substance sample to acquire a differential spectrum, wherein a value of a characteristic peak of said differential spectrum represents properties of said test substance sample.

2. The method as claimed in claim 1, further comprising a step of:
performing smooth and peak search process on said differential spectrum to acquire the value of the characteristic peak of said differential spectrum.

3. The method as claimed in claim 1, further comprising a step of:
comparing the characteristic peak of said differential spectrum with characteristic peaks in a characteristic peak storage of dangerous substances to determine whether said test substance sample contains the dangerous substances.

4. The method as claimed in claim 1, further comprising a step of:
correcting the characteristic peak of said differential spectrum according to the environmental conditions.

5. The method as claimed in claim 1, further comprising a step of:
storing the ion migration spectrum of said pure carrier gas and the ion migration spectrum of the carrier gas containing the test substance sample.

6. The method as claimed in claim 1, further comprising steps of:
acquiring the ion migration spectrums of the pure carrier gas for multiple times, and performing the differential process on the multiple acquired ion migration spectrums of the pure carrier gas to find and correct the shift of said ion migration spectrum.

7. An ion migration spectrum detector, comprising a migration spectrum acquirement device for acquiring a migration spectrum of carrier gas containing a test substance sample and a migration spectrum of pure carrier gas, said ion migration spectrum detector further comprising:
a differential spectrum acquirement device for performing differential process on the migration spectrum of said pure carrier gas and the migration spectrum of the carrier gas containing the test substance sample to acquire a differential spectrum, wherein the value of a characteristic peak of said differential spectrum representing properties of said test substance sample.

8. The ion migration spectrum detector as claimed in claim 7, wherein said differential spectrum acquirement device performs smoothing and peak search process on said differential spectrum to acquire the value of the characteristic peak value of said differential spectrum.

9. The ion migration spectrum detector as claimed in claim 7, further comprising:
a characteristic peak comparison device for comparing the characteristic peak of said differential spectrum with characteristic peaks in a characteristic peak storage of dangerous substances to determine whether said test substance sample contains the dangerous substances.

10. The ion migration spectrum detector as claimed in claim 7, further comprising:
a differential spectrum correction device for correcting the characteristic peak of said differential spectrum according to the environmental conditions.

11. The ion migration spectrum detector as claimed in claim 7, further comprising:
an ion migration spectrum memory for storing the ion migration spectrum of said pure carrier gas and the ion migration spectrum of the carrier gas containing the test substance sample.

12. The ion migration spectrum detector as claimed in claim 7, wherein said migration spectrum acquiring device acquires the migration spectrums of the pure carrier gas for multiple times, and performs the differential process on the multiple acquired migration spectrums of the pure carrier gas to find and correct the shift of said ion migration spectrum.

13. An ion migration spectrometer, comprising the ion migration spectrum detector claimed in any one of claims 7-12.

14. A computer program product comprising instructions for implementing the steps of a method according to any one of claims 1-6 when loaded and run on a computer.

15. A recording media having instructions stored therein for implementing the steps of a method according to any one of claims 1-6 when loaded and run on a computer.
